# EUROPEAN PATENT APPLICATION

(11) **EP 4 368 831 A1**
(43) Date of publication of application: **15.05.2024**
(21) Application number: 21948701.4
(22) Date of filing: 06.07.2021
(51) Int. Cl.: F03D 13/10, F03D 80/50

(54) **METHOD FOR LIFTING AND LOWERING BLADES WITHOUT USING A CRANE, AND DEVICES USED**

(71) Applicant: Nabrawind Technologies SL, 31002 Pamplona (ES)
(72) Inventor: IRIARTE ELETA, Javier, 31180 Zizur Mayor (ES); FERNÁNDEZ GARCÍA, Ana, 28341 Valdemoro (ES); SANZ PASCUAL, Eneko, 31002 Pamplona (ES); AROCENA DE LA RÚA,, Ion, 31001 Pamplona (ES)
(86) International application number: PCT/ES2021/070488
(87) International publication number: WO 2023/281127

(57) **Abstract**

Disclosed is a method for lifting and lowering blades with-out using a crane, which uses an aligning and inserting device to solve the problem caused by the tilt and coning of the first/last 200-400mm of the blade. The device comprises at least one hoist (4) and a pair of cables (5) coordinated by a pulley (10) and screwed to a bearing (12) by means of connecting elements at the ends thereof. The cables (5) are screwed diametrically opposite and as close as possible to the centre of gravity (CG) of the blade. After the initial descent, the blade is secured and a stiffening plate (20) is added to the blade root (13), and the lowering device, formed by a drumless hoist (18) and a set of pulleys (19), is used to lower the blade by means of a passing cable (22) joined to the plate (20). A crane disposed on the grounds moves an auxiliary sling placed on the tip (23) of the blade and helps to navigate the transition piece (24) and bottom part (25) of the tower.

## Description

### Field of invention

Blades are one of the most critical elements of the wind turbine. Its assembly is complex and expensive and during the service life of a wind turbine, the blades need to be repaired. The proposed method manages the assembly, replacement or repair of the blades without the need for large cranes and solving the problems of initial disengagement due to tilt and coning of the blade.

### Background

Wind turbines have expensive assembly and maintenance because the main elements that make them up operate at a considerable height from the ground. The blades are one of the most critical elements of the wind turbine and their assembly or repair requires large cranes that reach or exceed the hub heigh (HH).

For years there has been a technological trend around craneless or replacement of blades without the use of a crane. There are multiple technologies focused on vertically lowering the blade to deposit it on the ground and later raise it again. Among these solutions are technologies that use cables and hoists to lower and lift the blade. But, in addition, the additional use of complex rigid devices is needed that are anchored to the root of the blade or embrace it in different parts of its surface, allowing the blade to be aligned and discharged from the hub. The blade has an inclination α with respect to a horizontal plane due to the tilt of the nacelle and the coning of the blade with respect to the hub. This inclination makes it difficult to unhook and the initial lowering phase of the blade.

Patent US201400100658A1 assembles several extensions as bolts, said extensions being longer than the bolts themselves. Subsequently, the blade is moved to an intermediate position using said extensions as a support bolt.

Patent EP2369174A1 uses an adapter template, where winches are connected, and bolts of greater length than the rest of the support bolts. By unscrewing the nuts of the longest bolts, the blade is lowered until support chains can be added.

Patent US101 13530B2 uses anchored cables that are regulated through support nuts. This also uses various utensils that surround the blade on the outside. The cables used have stop blocks and bushings along the cable to act as a mechanical stop during the initial lowering of the blade. The pulleys used are located on the blade bearing or outside the hub.

None of the state-of-the-art patents manages to solve the problem of the initial inclination of the blade due to coning and tilt. Tilt that can be aggravated by the wind that affects the blade and that can make it hit against the tower.

### Description

One object of the invention is to achieve the lowering of the blade to the ground without the need for large external cranes and housing all the necessary hoists inside the hub instead of on the ground, ensuring that the entire load reacts hanging inside of the hub. It is an object of the invention to use an alignment and hoisting device to lower the blade the initial 200 - 400 mm taking into account the arrangement of the center of gravity of the blade due to the angle α with respect to the horizontal plane due to the inclination of the blade by tilt and coning.

It is another object of the invention that the cable used in the alignment and insertion device of the blade has a connection element formed by: a threaded area in its lower part and a truncated-conical area in the upper part.

It is another object of the invention to complete the assembly with a lowering device that uses a hoist without a drum that, thanks to a certain number of forwards, manages to work at the necessary load.

It is another object of the invention that the lowering/lifting method has the minimum number of steps, highlighting the simplicity of execution of all of them:
Step 1- At least two hoists are fixed inside the hub structure: at least one hoist for the alignment and hoisting device and another for the lowering device. The hoists are transported inside the wind turbine manually, so their weight must be reduced.
Step 2- The cable (or cables) of the first device and the connecting element at its end pass through the inside of the bearing hole from which the bolt that fixes it has been removed and finally, they are screwed to the insert of the root of the bearing. the blade, ensuring that it is always as close to the center of gravity CG.
Step 3- The blade is lowered to a distance, preferably between 200 and 400 mm, using the cables of the alignment and hoisting device, which are perfectly coordinated with each other thanks to the use of at least one pulley, because during the compensation of the angle α that the blade has against the hub, only one of the cables may work and it must be able to support the entire weight of the blade. Situation that has not been solved until now with the known state of the art.
Step 4- The blade is fixed. The lowering device comes into operation by connecting to two or more blade inserts. The alignment and hoisting device and the fixation are removed.
Step 5- The auxiliary sling is raised from the tip of the blade with a rope installed in the nacelle to place the sling at the appropriate height without the need for lifting baskets. Step 6- The blade is lowered with the help of the elements of the lowering device and an external auxiliary crane that operates on the tip of the blade.

Once the pertinent repair or extension of the blade has been carried out, the blade is lifted, performing the steps mentioned in the reverse order. In the final hoisting of the blade, three hoists (instead of two) and some centering pins screwed into the inserts to assist in the final hoisting can be used.

From the above description, the following advantages arise:
- Speed in repairing or extending a blade (for example, adding an extender in the blade root area) is very important to minimize the costs of keeping the wind turbine stopped. The fewer elements that have to be installed and used, the more effective the blade lowering/raising process will be.
- Minimal use of tools (hoists with their corresponding cables, stiffeners, pulleys and turn removers), low investment and quick mobilization.
- Blade manipulation from the root inserts, the only area designed to connect the blade to the outside, dispensing with support means on the surface of the blade, which prevents damage during handling.
- Low number of operators: 2 in the hoists inside the hub and another in the auxiliary floor crane.
- Time: 1 day to install the system, lower and raise a blade and uninstall the system.

### Brief description of the drawings

A brief description will be given below for a series of drawings useful for better understanding the invention and that expressly relate to an embodiment of said invention that is presented as a non-limiting example thereof.
Figure 1 shows the rotor in section with the alignment and hoisting device and a part of the blade to be lowered.
Figure 2 shows a top view of the blade and its bearing, where the position of the center of gravity CG is indicated.
Figure 3 shows the rotor in lateral section with the blade hanging and the angle due to coning and tilt.
Figure 4 shows the rotor of the previous figure when it begins its descent, balances and the rotation of the blade is counteracted.
Figure 5 shows the cables and the connecting element at their end.
Figure 6 represents a section of the bearing and the blade root with a cable screwed on.
Figure 7 shows the detail of a section of the blade root and the centering pins.
Figure 8 shows the sectioned rotor seen from above, with the lowering device anchored in the hub.
Figure 9 shows a plan view of the blade root with a detail of the stiffening bar.
Figure 10 shows the rotor in lateral section with details of the anchoring of the lowering device.

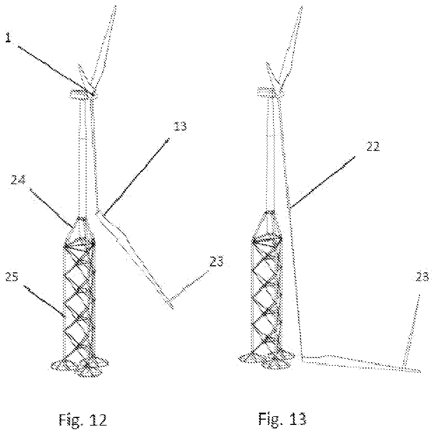

Figures 11, 12 and 13 show the blade lowering sequence.

### Detailed description

The method described uses several hoists, all of them fixed inside the hub so that the entire load of the blade reacts hanging inside the hub. They are elements limited by the maximum weight allowed to be carried by at least one person working inside a wind turbine. They are small elements that may require pulleys to distribute and equalize the load.

At least one hoist will be used as a lifting element to form the alignment and hoisting device. And a drumless electric hoist is used for the lowering device.

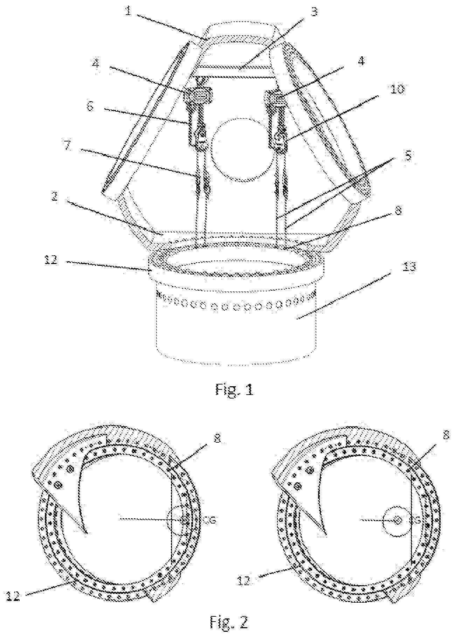

As shown in figure 1, the hub (1) is sectioned and the interior of the hub (2) is shown. In the upper part of the hub (1), in the fixed track of the connection with the upper blades and using an auxiliary beam (3), the alignment and slot-forming device is anchored by at least one hoist and preferably two. The entire load on the blade reacts by hanging inside the hub (2). According to this practical embodiment, each of the hoists (4) of the alignment and hoisting device works with cables (5) whose greatest requirement is that they have to pass through the holes of the bearing (8) and be anchored in the insert or T-bolt (9) from the root of the blade. To increase the load capacity, since a single insert (9) cannot support the total weight of the blade and the movement of the blade can cause the entire load to be under a single hoist (4), it is necessary to unfold the load with a pulley (10). The pulleys (10) ensure that the two cables support the same load. The interface between hoist (4) and pulley (10) is with a set of chains (6). The interface between the pulley (10) and the blade root insert (9) includes a turn remover (7).

As shown in Figure 2, the center of gravity CG (marked with a circle) can be in front or behind the pair of bearing holes (8) that the cables (5) pass through before being threaded into the inserts (9) from the root of the blade. If the blade is opened using rigid elements such as threaded bars or similar, with any displacement of the CG, these elements bend. Working with cables (5) allows the blade to rotate, a rigid element does not. According to this practical embodiment, the points where the pairs of cables are placed are symmetrical. They are practically aligned and as close to the CG as possible.

As soon as the rest of the nuts are released from the bolts and the blade is hanging from the cables (5), it tends to rotate due to coning and tilt. There is 5° of tilt. The cables (5) have to be very well coordinated with each other, since there are times when only one of them works.

For example, a small gust of wind can shift the CG center of gravity and force a single cable to support the entire weight.

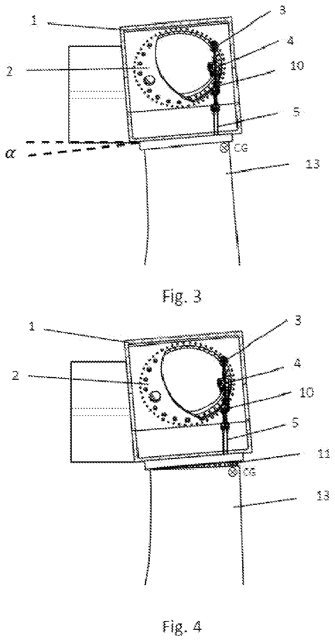

As shown in figure 3, the blade has an inclination α with respect to the horizontal plane, due to coning and tilt. When the nuts are removed from the rest of the blade bolts (11) and with the two pairs of cables holding the blade, it is first released from the outermost part of the hub (1). The blade opens correctly since it can rotate thanks to the fact that it hangs from cables, as seen in figure 4. And all this without damaging the blade bolts (11) that protrude from the inserts (9) at the root of the blade. The alignment device is capable of supporting the entire blade on a pair of cables (5) thanks to the effect of the pulley (10) that distributes the weight. The cables (5) are very sensitive to twisting and the fact that they act in pairs is flattering.

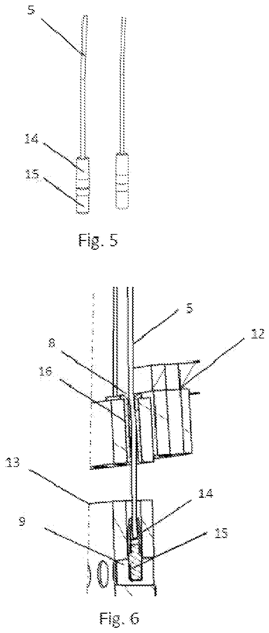

The alignment and hoisting device uses cables (5), preferably metallic, to be screwed to the previously emptied inserts (9). Figure 5 shows how the greatest requirement is that the cables (5) have to cross the bearing track (12) and specifically its holes (8) before being screwed into the insert (9) of the blade root (13). Each cable (5) has a connection element at its end and is made up of two pieces threaded together.

A truncated-conical piece with a thread inside is the upper piece (14). And the lower piece (15) consists of a threaded cylindrical area with a threaded male protruding. The union is made using the threaded male existing in the cylindrical part (15) and a threaded hole existing inside the truncated-conical part (14).

As shown in figure 6, the dimensions of the connection element are critical so that they can pass through the bearing holes (8) with a diameter of around 30 mm. The bearing hole (8) is protected with a centering bushing (16) to avoid damaging the cable (5) during its movement. Said bushing (16) is made of a softer metal than the cable (5) and is fixed on the edge of the bearing hole (8).

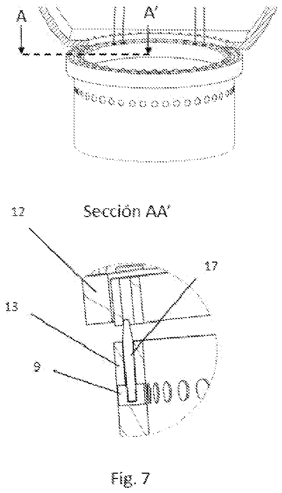

Figure 7 shows a section of the bearing (12) and the root of the blade (13) where the pins (17) used to center the blade in the final approach are located, when it is being raised. The pins (17) are threaded into the insert (9).

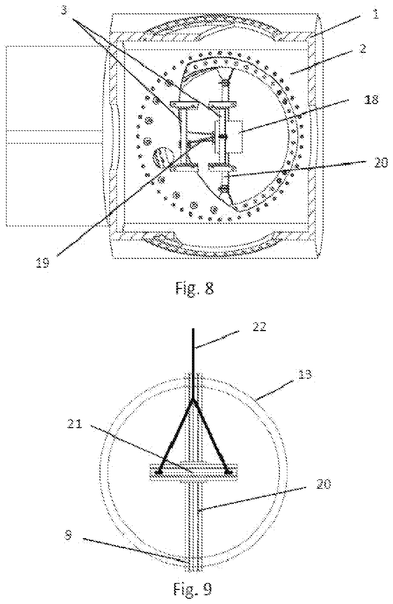

Figure 8 shows a section of the hub (1), revealing the interior (2) and the lowering device, which is anchored by an auxiliary beam (3) in the fixed track at the junction with the upper blades. The connections of the alignment device and the lowering device can be through beams (3) connected to the hub - bearing joint or to the blade - bearing joint. They can also be through chains connected to the hub - bearing joint or to the blade - bearing joint. And finally, they can be direct connections to the holes - screws of the hub - bearing joint or to the blade - bearing joint.

The lowering device uses a hoist without drum (18) that, thanks to a certain number of forwards (19) and its reduction effect, manages to work at the necessary load. A stiffening plate (20) is added to the blade root (13). Said plate (20) is coupled with the corresponding cable (22) of the lowering device by means of a connecting element (21) perpendicular to the plate itself. The connecting element (21) can be coupled in the middle of the plate (22) when it is made up of two pieces joined together. The connecting element (21) will have two connections with the cable (22), which favors the rotation of the blade to a horizontal position, as seen in Figure 9.

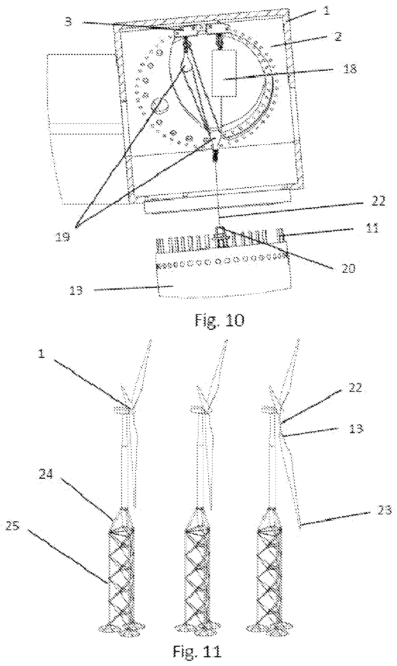

Figure 10 shows another view of the lowering device formed by the drumless hoist (18) and its double set of pulleys (19). The cable used for the lowering device is a through cable (22). That is, the cable to be used is relaxed and collected inside the hub, near the hub or in the nacelle itself. Only the one inside the hoist (18) is tensioned.

The method followed to lower blades without the use of a crane includes the following steps:
STEP1- Lift the complete lifting elements onto the hub (1) with the operators, both for the alignment and hoisting device, and for the lowering device. Anchor them inside (2) selecting the preferred embodiment.
STEP 2- Remove several nuts and bolts (11) from the root of the blade (13) depending on whether you want to lower the blade or the blade with the bearing (12). Pass the cables (5) of the hoists (4) through their respective pulleys (10), pass them through the corresponding hole in the bearing (8) previously protected with a bushing (17) and screw them into the insert of the T-bolt (9). The cables (5) of the alignment and hoisting device work in pairs and are threaded through the connection element, being arranged symmetrically and closest to the center of gravity (CG) of the blade.
STEP 3- Lower the blade between 200 and 400 mm, making, with the flexibility of the cable, the rotation due to the tilt and coning angle α. Fix the blade.
STEP 4- Screw the stiffening plate (20) into the blade root (13). Join the lowering device with the plate (20) using the off-center connecting element (21). The through cable (22) passes through the drumless hoist (18) and its double set of pulleys (19). Release the alignment and hoisting device.
STEP 5- Raise the auxiliary sling at the tip of the blade (23) with a rope installed in the nacelle. Place the sling at the proper height.
STEP 6- Lower the blade with the help of a guide applied to the tip of the blade (23) navigating the transition (24) and the bottom of the tower (25). The final turn of the blade before reaching the ground is done with the off-center connecting element (21) that anchors the stiffening plate (20) and with the auxiliary crane that pulls the sling at the tip of the blade (23).

## Claims

**1.** System for raising and lowering blades without the use of a crane, which uses hoists (4, 18) that are related to pulleys (10, 19) and cables (5, 22), as well as rigid plates (20) screwed to the root of the blade (13), **characterized in that** it comprises:
- an alignment and hoisting device used to separate/join the blade in its first 200 - 400 mm and
- a lowering device to lower/raise the blade to/from the ground,
the alignment and hoisting device including:
- at least one hoist (4) anchored inside (2) of the hub (1) that reacts the entire load from the inside,
- at least one cable (5) ended in a connecting element with a diameter smaller than the bearing hole (8),
- at least one pulley (10) per hoist (4) raising the load capacity and distributing the load between its corresponding inserts (9) and
- the cables (5) that pass through the holes of the bearing (8) are protected with a centering bushing (16) and are screwed into the insert (9) of the blade root (13) getting as close as possible to the center of gravity (CG),
and the lowering device comprising:
- at least one hoist without drum (18) and one set of pulleys (19), anchored to the interior (2) of the hub (1) that react all the load from the inside, and
- a through cable (22) that is anchored by the connecting element (21) off-center with a stiffening plate (20) screwed to two or more inserts (9) of the blade.

**2.** Alignment and hoisting system according to the previous claim, **characterized in that** the connecting element smaller than the bearing hole (8) is formed by two pieces threaded together: the upper one (14), where the cable (5) is fixed, is frustoconical with a thread inside and the lower one (15) is cylindrical with its threaded outer surface that is screwed to the inserts (9) and with a threaded male protruding to join the upper piece (14).

**3.** Alignment and hoisting system according to the first claim, **characterized in that** the anchoring inside the hub chassis (2) is carried out with auxiliary beams (3), the pulleys (4) having a set of chains (6) and a turn remover (7), the bushings (16) of the holes (8) are preferably metallic and are anchored to the edge of the bearing (12).

**4.** Blade lowering system according to the previous claim, **characterized in that** the final turn of the blade before reaching the ground is made with the connecting element (21) and its two connections with the cable (22) and with a crane arranged on the ground that moves a guide applied to the tip of the blade (23).

**5.** Blade lowering system according to the first claim, **characterized in that** the drumless hoist (18) of the lowering device has a through cable (22) tensioned inside the hoist (18) and the rest is released and stored in the inside the hub, near the hub or in the nacelle itself.

**6.** Blade lowering system according to the previous claim, **characterized by** having conical pins (17) in some of the inserts (9) during the operation of the alignment and insertion device in the raising process.

**7.** Blade lowering system according to the previous claim, **characterized in that** the alignment and hoisting device and the lowering device are connected to the hub - bearing joint or to the blade - bearing joint in three possible ways: directly to the holes of the hub, through beams (3) or through chains.

**9.** Method of raising and lowering blades without the use of a crane, **characterized in that** it comprises the following steps:
- The operators to raise inside the hub (1) the complete lifting elements, both for the alignment and hoisting device, and for the lowering device; anchor them to the chassis (2) selecting the preferred embodiment,
- remove several nuts and bolts (11) from the blade bearing (12); pass the cables (5) of the hoists (4) through their respective pulleys (10), pass them through the corresponding hole in the bearing (8) previously protected with a bushing (16) and screw them into the insert (9) of the T-bolt from the root of the blade (13), thread the cables (5) diametrically opposite and as close as possible to the center of gravity (CG),
- lower the blade between 200 and 400 mm and fix the blade,
- screw the stiffening plate (20) into the blade root (13), join the lowering device with the plate (20) using the connecting element (21); previously crossing the hoist without drum (18) and the double set of pulleys (19) with the through cable (22), release the alignment and hoisting device,
- raise the auxiliary sling at the tip of the blade (23) with a rope installed in the nacelle and place the sling at the appropriate height,
- lower the blade with the help of a guide applied to the tip of the blade (23), rotate the blade before reaching the ground with the off-center connecting element (21) that anchors the stiffening plate (20) and with the guide the tip of the blade (23).

**10.** Method of raising and lowering blades without the use of a crane according to the previous claim, **characterized in that** during the rise at least one centering pin (17) is added to the inserts (9) of the root of the blade (13) for when the alignment and drilling device is used.
